# EUROPEAN PATENT APPLICATION

(11) **EP 2 845 699 A2**
(43) Date of publication of application: **11.03.2015**
(21) Application number: 14182407.8
(22) Date of filing: 27.08.2014
(51) Int. Cl.: B25J 13/08, B25J 15/00

(54) **Robot hand, robot system, and method for depalletizing article**

(30) Priority: 03.09.2013 JP 2013182568
(71) Applicant: Kabushiki Kaisha Yaskawa Denki, Kitakyushu-shi, Fukuoka 806-0004 (JP)
(72) Inventor: Shimono, Toshiaki, Kitakyushu-shi, Fukuoka 806-0004 (JP)
(74) Representative: Viering, Jentschura & Partner Patent- und Rechtsanwälte

(57) **Abstract**

A robot hand (10) of a first robot (2) that handles an article (W) includes a baseplate (21); an attraction pad (22) that is disposed at the baseplate (21) and that is configured to hold the article (W); and first to third proximity sensors (24, 25, 26) that are disposed at the baseplate (21), each of the proximity sensors (24, 25, 26) being configured to detect whether or not the article (W) exists at a side of the attraction pad (22).

## Description

### BACKGROUND OF THE INVENTION

### 1. Field of the Invention

The embodiments disclosed herein relate to a robot hand, a robot system, and a method for depalletizing an article.

### 2. Description of the Related Art

Japanese Unexamined Patent Application Publication No. 2001-317911 discusses an article position recognizing device that detects the position of an article and allows the article to be automatically depalletized. In the article position recognizing device, using contour data of a top article detected by an image processor, a rough position of the top article is determined to recognize the position of the article.

In the above-described related art, the position of an article is recognized by using contour data of a top article. Therefore, when a plurality of articles having the same shape, such as cardboard boxes, are disposed side by side without any gaps therebetween, the articles are not capable of being recognized as a plurality of articles, that is, the articles may be erroneously recognized as a single article. When such an erroneous recognition occurs, the article may drop an error may occur. This may cause a depalletizing operation to be stopped.

### SUMMARY OF THE INVENTION

Accordingly, it is an object of the disclosure to provide a robot hand, a robot system, and a method for depalletizing an article, which are capable of continuing a depalletizing operation even if an article to be depalletized is erroneously recognized.

According to an aspect of the disclosure, there is provided a robot hand of a robot that handles an article. The robot hand includes a baseplate; a holding member that is disposed at the baseplate and that is configured to hold the article; and a plurality of proximity sensors that are disposed at the baseplate, each proximity sensor being configured to detect whether or not the article exists at a side of the holding member.

According to another aspect of the disclosure, there is provided a robot system including a robot that handles an article; the robot hand according to the aspect of the robot; and a controller that is configured to control an operation of the robot and an operation of the robot hand.

According to still another aspect of the disclosure, there is provided a method for depalletizing an article using a robot including a robot hand that includes a baseplate, a plurality of attraction pads, and a plurality of proximity sensors. The method includes attracting and handling the article using the attraction pad or attraction pads in a predetermined area; recognizing external-form information of the article on the basis of a detection result of the proximity sensor or proximity sensors in an operated state; setting an area of the attraction pad or attraction pads that perform attraction on the basis of the recognized external-form information; and re-attracting and handling the article using the attraction pad or attraction pads in the set area. The plurality of attraction pads are disposed so as to be interspersed in a direction of a surface of the baseplate and are each configured to attract a top surface of the article. The plurality of proximity sensors are disposed at the baseplate, each proximity sensor being configured to detect whether or not the article exists at a side of the holding member.

According to the disclosure, it is possible to continue a depalletizing operation by the robot hand even if an article to be depalletized is erroneously recognized.

### BRIEF DESCRIPTION OF THE DRAWINGS

Fig. 1 is a schematic top view of an exemplary overall structure of a robot system according to an embodiment.
Fig. 2 is a schematic side view of the exemplary overall structure of the robot system according to the embodiment.
Figs. 3A, 3B, and 3C are, respectively, a top view, a bottom view, and an end view taken along line IIIC-IIIC of an exemplary structure of a robot hand.
Fig. 4 is an explanatory view of a reflective photoelectric sensor.
Fig. 5 is an explanatory view of a transmissive photoelectric sensor.
Fig. 6 is a block diagram of an exemplary functional structure of a robot controller.
Figs. 7A and 7B are each an explanatory view of an example of attracting and holding an article when an image recognition error occurs.
Fig. 8 is a flowchart of an example of a control procedure performed by the robot controller when an image recognition error occurs.

### DESCRIPTION OF THE EMBODIMENTS

An embodiment is hereunder described with reference to the drawings. The terms "front", "back", "left", "right", "top", and "bottom" in the description of the specification correspond to directions labeled "front", "back", "left", "right", "top", and "bottom" in the drawings.

### 1. Overall Structure of Robot System

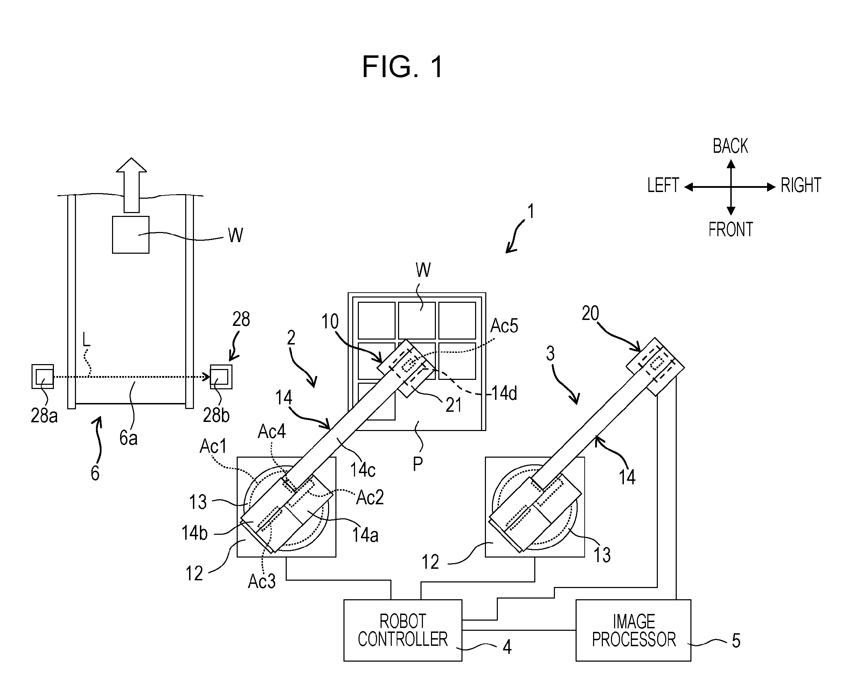

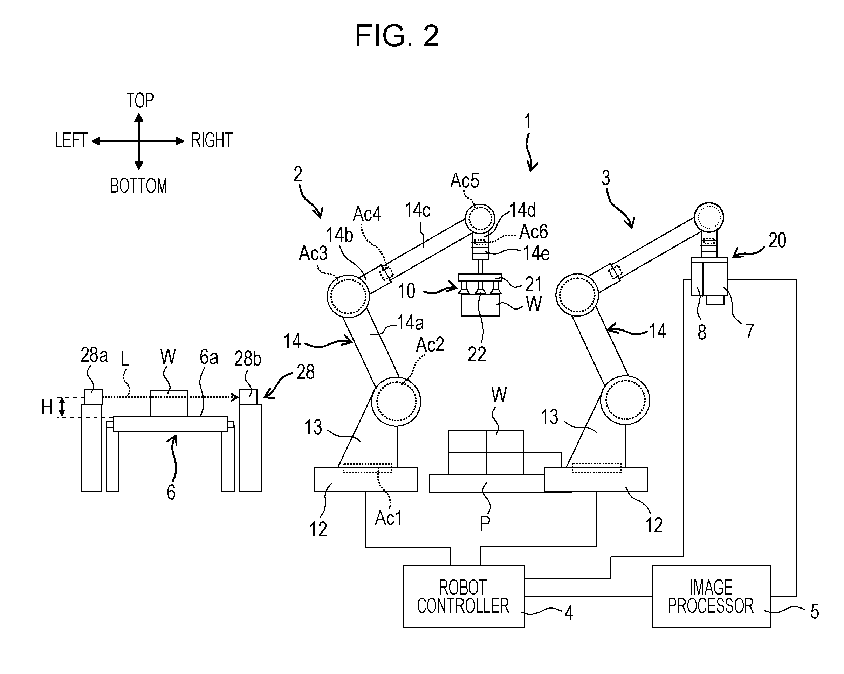

First, an overall structure of a robot system 1 according to an embodiment is described with reference to Figs. 1 and 2.

As shown in Figs. 1 and 2, the robot system 1 according to the embodiment includes a first robot 1, a second robot 3, a robot controller 4 (controller), an image processor 5, and a conveyor 6. The robot system 1 depalletizes a plurality of articles W that are stacked on a pallet P one at a time from the pallet P. Depending upon the size of the articles W, the articles W may be depalletized two or more articles at a time from the pallet P.

The first robot 2 is a robot that handles an article W. The first robot 2 includes a robot hand 10 that is provided with, for example, attraction pads 22 (holding members) as a working tool. The first robot 2 is provided near the pallet P (that is, on the left of the pallet P in the example shown in Fig. 1). The second robot 3 includes a robot hand 20 that is provided with a camera 7 and a laser sensor 8. The second robot 3 is provided near the pallet P (that is, on the right of the pallet P in the example shown in Fig. 1).

The robot controller 4 is formed so as to control the operations of the robots 2 and 3 and the robot hands 10 and 20 of the respective robots 2 and 3.

The first robot 2 and the second robot 3 have basically the same structure except that the structures of the robot hands 10 and 20 differ from each other. Therefore, here, the first robot 2 is described. The main portions of the second robot 3 are given reference numerals and are not described. The first robot 2 corresponds to a robot in the claims, and the robot hand 10 corresponds to a robot hand in the claims.

The first robot 2 includes a base 12 that is fixed at a setting location (floor (not shown) in this example) of a working place where a depalletizing operation is performed, a rotary member 13 that is rotatably mounted on a top end portion of the base 12, and an arm 14 that is mounted on the rotary member 13.

The rotary member 13 is provided on the top end portion of the base 12 so as to be rotatably in a horizontal plane. An actuator Ac1 that rotates and drives the rotary member 13 is placed at or near a connection portion of the rotary member 13 and the base 12.

The arm 14 is formed by connecting a first arm portion 14a, a second arm portion 14b, a third arm portion 14c, a fourth arm portion 14d, and a fifth arm portion 14e in that order from a base end side 13 at the side of the rotary member 13 towards a front end side that is opposite to the base end side 13.

The first arm portion 14a is connected to a top end portion of the rotary member 13 so as to be rotatable in a vertical plane. The second arm portion 14b is connected to the first arm portion 14a so as to be rotatable in a vertical plane. The third arm portion 14c is connected to the second arm portion 14b so as to be rotatable in a plane that is perpendicular to a direction of extension of the second arm portion 14b. The fourth arm portion 14d is connected to the third arm portion 14c so as to be rotatable in a vertical plane. The fifth arm portion 14e is connected to the fourth arm portion 14d so as to be rotatable in a plane that is perpendicular to a direction of extension of the fourth arm portion 14d.

An actuator Ac2 that rotates and drives the first arm portion 14a is provided at or near a connection portion of the first arm portion 14a and the rotary member 13. An actuator Ac3 that rotates and drives the second arm portion 14b is provided at or near a connection portion of the second arm portion 14b and the first arm portion 14a. An actuator Ac4 that rotates and drives the third arm portion 14c is provided at or near a connection portion of the third arm portion 14c and the second arm portion 14b. An actuator Ac5 that rotates and drives the fourth arm portion 14d is provided at or near a connection portion of the fourth arm portion 14d and the third arm portion 14c. An actuator Ac6 that rotates and drives the fifth arm portion 14e is provided at or near a connection portion of the fifth arm portion 14e and the fourth arm portion 14d. The structural form of the first robot 2 and the second robot 3 is not limited to this example. The first robot 2 and the second robot 3 may have various structural forms.

By controlling the driving of the actuators Ac1 to Ac6 of the first robot 2 and the second robot 3 by the robot controller 4, the operations of the first robot 2 and the second robot 3 are controlled so that the robot hand 10 of the first robot 2 at an end of the arm 14 and the robot hand 20 of the second robot 3 at an end of the arm 14 reach respective required positions in a predetermined order.

The robot hand 20 that is provided with the camera 7 and the laser sensor 8 at the end of the arm 14, that is, at the end of the fifth arm portion 14e is mounted on the second robot 3. When articles W that are stacked on the pallet P are removed from the pallet P, the second robot 3 is controlled by the robot controller 4 so as to cause the robot hand 20 at the end of the arm 14 to be positioned above the articles W that are stacked on the pallet P. Then, in this state, first, by scanning the top surface of a top article W using the laser sensor 8, distance information regarding the distance to the top surface of the article W is obtained, to identify the article W whose top surface exists at a highest position. The distance information regarding the distance to the top surface of the identified article W is input to the robot controller 4.

Next, on the basis of the distance information input to the robot controller 4, the camera 7 of the robot hand 20 performs imaging on the top surface of the identified article W, and generates image information of the top surface of the identified article W. The generated image information is output from the camera 7 and input to the image processor 5. Then, the image processor 5 performs an image recognition operation on the input image information, to obtain external-form information regarding the external form (dimensions, shape, etc.) of the top surface of the article W. The obtained external-form information regarding the external form of the top surface of the article W is input to the robot controller 4.

When the scanning of the article W on the pallet P by the laser sensor 8 and the imaging operation by the camera 7 are completed, the second robot 3 is controlled by the robot controller 4 so as to cause the robot hand 20 to retreat to a retreating position at a side of the pallet P (that is, a position on the right of the pallet P in the example shown in Fig. 1) from the position above the pallet P. Concurrently with the retreating of the robot hand 20 of the second robot 3, by control of the robot controller 4 based on, for example, the distance information and the external-form information of the aforementioned article W, the first robot 2 causes the robot hand 10 to move to a location above the pallet P from a retreating position (such as a position above the conveyor 6). Then, the first robot 2 causes the robot hand 10 to move downward, the attraction pads 22 to contact the top surface of the identified article W, and the article W to be attracted and held by the attraction pads 22. Next, the first robot 2 is controlled by the robot controller 4 so as to cause the robot hand 10 to move upward to the location above the conveyor 6 from the location above the pallet P. Then, the first robot 2 causes the robot hand 10 to move downward towards the conveyor 6, to place the article W held by the attraction pads 22 on a transport surface 6a of the conveyor 6.

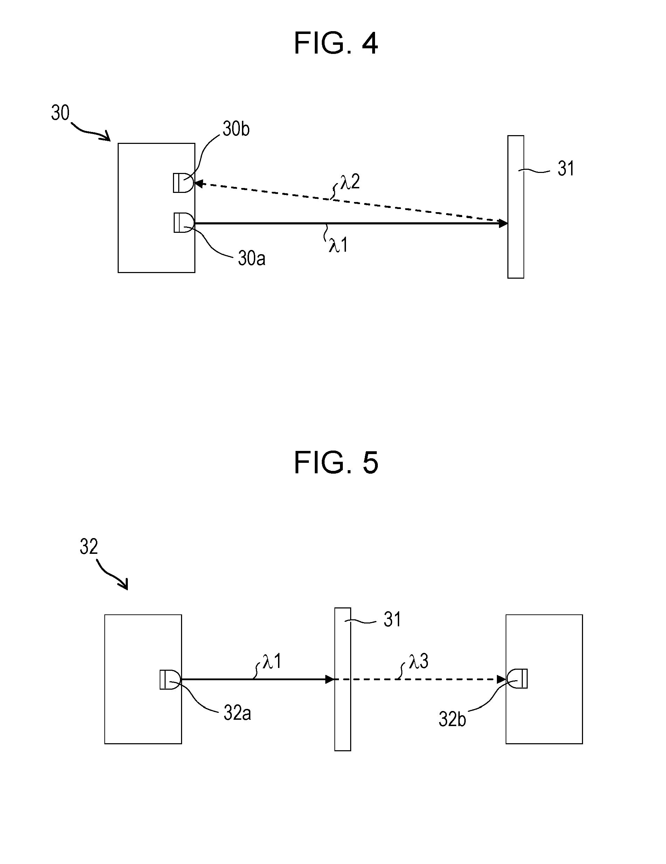

The conveyor 6 is formed so that, by moving the transport surface 6a in the direction of an arrow, the article W placed on the transport surface 6a is transported to a take-out position. A photoelectric sensor 28 that detects the position of the bottom surface of the article W that is placed on the conveyor 6 is provided at a location of the conveyor 6 where the article W is placed by the first robot 2. The photoelectric sensor 28 is a transmissive sensor similarly to a sensor 32 (described below) shown in Fig. 5. The photoelectric sensor 28 includes a phototransmitting section 28a that is positioned on one side of the conveyor 6 in a width direction thereof and a photoreceiving section 28b that is positioned on the other side of the conveyor 6 in the width direction thereof. The phototransmitting section 28a and the photoreceiving section 28b are disposed so that an optical axis L is positioned above the transport surface 6a of the conveyor 6 by a predetermined height H.

When the first robot 2 causes the article W held by the attraction pads 22 to move downward towards the conveyor 6, the photoelectric sensor 28 detects the bottom surface of the article W. Although the robot controller 4 stops the operation of the first robot 2 when the bottom surface of the article W is detected, the robot hand 10 moves downward by a predetermined distance as a result of coasting. A downward-movement distance by which the robot hand 10 moves downward as a result of coasting and the height H are previously set so as to be substantially equal to each other (the height H is slightly larger). Therefore, when the photoelectric sensor 28 has detected the bottom surface of the article W, the robot controller 4 stops the operation of the first robot 2 and, then, causes the attraction pad 22 to stop holding the article W, as a result of which the article W is capable of being smoothly placed on the conveyor 6 regardless of the height of the article W.

With the height H being set greater than the downward-movement distance by a predetermined distance D, it is possible for the robot controller 4 to lower the robot hand 10 (article W) by the predetermined distance D after it has stopped the operation of the first robot 2, and, then, to stop the attraction pads 22 from holding the article W.

### 2. Detailed Structure of Robot Hand

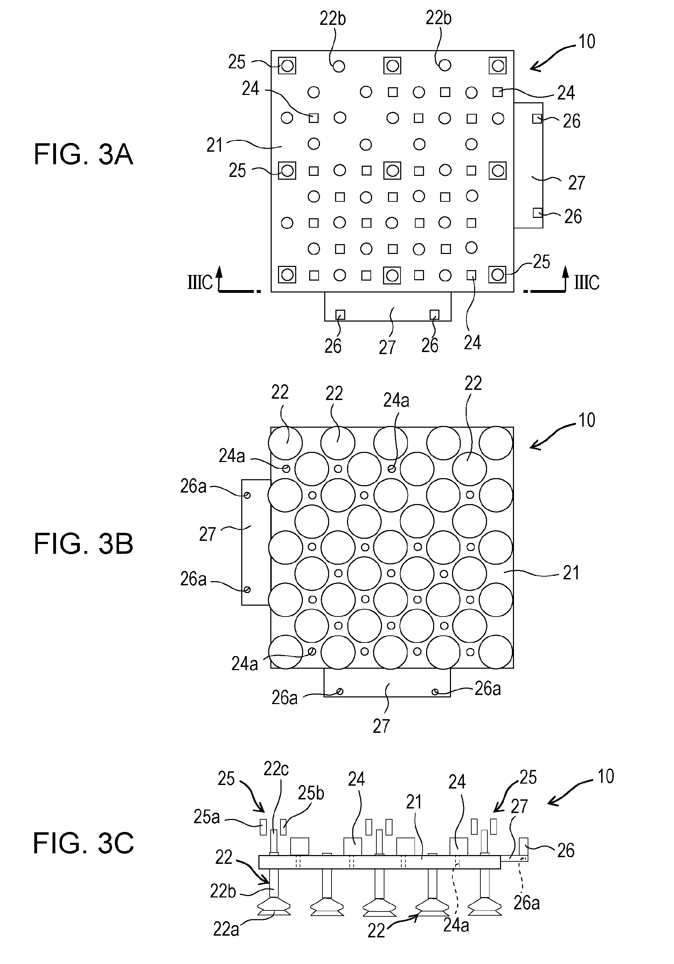

A detailed structure of the robot hand 10 of the first robot 2 is described with reference to Figs. 3A to 3C. Fig. 3A is a top view of the robot hand 10. Fig. 3B is a bottom view of the robot hand 10. Fig. 3C is an end view taken along line IIIC-IIIC of Fig. 3A. As shown in Figs. 3A to 3C, the robot hand 10 of the first robot 2 includes a baseplate 21 that is substantially square-shaped in plan view in this example, the plurality of pads 22 disposed on the baseplate 21, and a plurality of first to third proximity sensors 24 to 26 disposed on the baseplate 21. The baseplate 21 has external dimensions (for example, substantially the same external dimensions) corresponding to the dimensions of a largest one of the plurality of articles W that become predeterminate objects to be held.

### 2-1. Structure of Attraction Pads

As shown in Fig. 3B, the plurality of the attraction pads 22 are placed vertically and horizontally so as to be interspersed in a direction of a surface of the baseplate 21. In this example, with one attraction pad 22 being disposed between inner sides of two outer attraction pads 22, the attraction pads 22 are disposed inwardly to the center from positions of outer peripheral portions of the baseplate 21 situated along the four sides of the baseplate 21. The way in which the attraction pads 22 are disposed is not limited to this example. The attraction pads 22 may be variously disposed. As shown in Fig. 3C, each attraction pad 22 includes a bellows-type attraction section 22a disposed below the base plate 21 and a suction tube 22b that supports the attraction section 22a at the baseplate 21. A suction tube path extending from a vacuum source (not shown) is connected to the suction tubes 22b. By sucking inner portions of attraction sections 22a via the suction tube path and corresponding suction tubes 22b, the attraction pads 22 attract the top surface of the article W with which the attraction sections 22a contact, and hold the article W. By enabling or disabling suction, the size of an attraction area of the baseplate 21 for attraction by the attraction pads 22 is variously changeable, so that the attraction pads 22 are capable of performing attraction in accordance with the external form of the article W to be held.

### 2-2. Proximity Sensors

The plurality of first to third proximity sensors 24 to 26 that are provided at the baseplate 21 are described.

The first proximity sensors 24 (first sensors) are interspersed and disposed in the direction of the surface of the baseplate 21. In the example, the first proximity sensors 24 are provided on the baseplate 21 so as to be positioned between predetermined attraction pads 22 among the attraction pads 22 in the second row, the third row, and the fifth to ninth rows from the top in Fig. 3A. The arrangement of the first proximity sensors 24 is not limited to this example. The first proximity sensors 24 can be variously arranged. The first proximity sensors 24 are used as load presence sensors that detect the existence of an article W attracted to attraction pads 22. For example, reflective photoelectric sensors 30 such as that shown in Fig. 4 are used for the first proximity sensors 24. Light path holes 24a extending vertically through the baseplate 21 are provided at the positions of the baseplate 21 corresponding to the first proximity sensors 24.

As shown in Fig. 4, a reflective photoelectric sensor 30 includes a phototransmitting section 30a and a photoreceiving section 30b disposed on one side of a detection object 31 to be detected. In the photoelectric sensor 30, the phototransmitting section 30a projects a light beam λ1, such as infrared light, onto the detection object 31. The light beam λ1 is reflected by the detection object 31, and a reflected light beam λ2 of a smaller quantity is received by the photoreceiving section 30b. If the quantity of light received by the photoreceiving section 30b is greater than or equal to a certain amount, the photoelectric sensor 30 detects that the detection object 31 exists within a certain distance from the photoelectric sensor 30, and, for example, turns on. Then, when the detection object 31 moves out of a range of the certain distance from the photoelectric sensor 30, attenuation of the quantity of the reflected light beam λ2 from the detection object 31 is increased, and the quantity of light received by the photoreceiving section 30b becomes less than the certain amount, so that the photoelectric sensor 30 detects that the detection object 31 does not exist within the certain distance, and, for example, turns off.

Each first proximity sensor 24 is such that the range of the certain distance is set to a range from the position of a lower surface of the baseplate 21 to a position that is below an end of its corresponding attraction pad 22 by a predetermined distance. The first proximity sensors 24 project and receive light via the path holes 24a, and detect whether or not an article W exists within the range of the certain distance from the lower surface of the baseplate 21. By scattering and disposing the first proximity sensors 24 having such a structure in the direction of the surface of the baseplate 21, it is possible to recognize the external-form information (dimensions, shape, etc.) of the article W held by the attraction pads 22.

If an obstacle exists in a path of movement of the robot hand 10 that is moving (downward or horizontally), the first proximity sensors 24 are capable of detecting the obstacle to avoid a collision.

Further, when an article W is held by attraction pads 22, the first proximity sensors 24 at an area corresponding to the external form of the article W are supposed to detect the existence of the article W (that is, are supposed to be turned on). Therefore, if all of the first proximity sensors 24 when the article W is being held detect that the article does not exist (that is, all of the sensors 24 are turned off), it is assumed that the article W has dropped. That is, it is possible to detect that the article W has dropped.

In the robot system 1, since external-form information of an article to be held is obtained as a result of laser scanning and image recognition, the controller is capable of predicting (an area of) the first proximity sensors 24 that detect the existence of an article on the basis of the external-form information. Therefore, when there is a difference between (an area of) the first proximity sensors 24 that have actually detected the existence of an article that is being held and (the area of) the first proximity sensors 24 that are predicted as being sensors that detect the existence of the article that is being held, it is possible to determine that a wrong article other than the specified article is held. That is, it is possible to detect that a wrong article is held.

As shown in Fig. 3A, the second proximity sensors 25 (second sensors) are provided at substantially equal intervals along at least a contour of the baseplate 21. In this example, the second proximity sensors 25 are disposed at the four corners, at central portions of corresponding outer peripheral portions at the four sides, and at a central portion of the baseplate 21. The arrangement of the second proximity sensors 25 is not limited to this example. The second proximity sensors 25 can be variously arranged. The second proximity sensors 25 are used as push-in avoiding sensors that do not allow an article W to be pushed in by the attraction pads 24. For example, transmissive photoelectric sensors 32 such as that shown in Fig. 5 are used for the second proximity sensors 25.

As shown in Fig. 5, a transmissive photoelectric sensor 32 includes a phototransmitting section 32a that is disposed on one side of a detection object 31 to be detected and a photoreceiving section 30b disposed on the other side of the detection object 31. In the photoelectric sensor 32, the phototransmitting section 32a projects a light beam λ1 onto the detection object 31. If the detection object 31 exists in a path of the light beam λ1, a transmitted light beam λ3 whose quantity is reduced as a result of transmission of the light beam λ1 through the detection object (and interception of the light beam λ1 by the detection object 31). If the quantity of light received by the photoreceiving section 32b is less than or equal to a certain amount, the photoelectric sensor 32 detects that the detection object 31 exists, and, for example, turns on. Then, when the detection object 31 moves away from the path of the light beam λ1 projected by the detection object 31, the amount of light received by the photoreceiving section 32b becomes greater than or equal to a certain amount, so that the photoelectric sensor 32 detects that the detection object 31 does not exist, and, for example, turns off.

As shown in Fig. 3C, each second proximity sensor 25 includes a phototransmitting section 25a and a photoreceiving section 25b disposed, respectively, on one side and on the other side in a transverse direction of a rod 22c connected to a suction tube 22b, and is fixed at a predetermined height. Each rod 22c is a member that corresponds to the detection object 31 and moves vertically in accordance with a vertical movement of the corresponding attraction pad 22. When, by this, the attraction pads 22 contact the top surface of an article W, and the baseplate 21 moves downward in such a manner that the lower surface of the baseplate 21 and the top surface of the article W come closer to each other than a predetermined distance, a light path of light that is projected from the phototransmitting sections 25a is intercepted by the rods 22c. As a result, the second proximity sensors 25 detect that the baseplate 21 and the article W are close to each other.

Here, in the robot system 1, distance information regarding the distance to the top surface of a top article W is obtained by laser scanning performed by the laser sensor 8 and the robot hand 10 is moved downward on the basis of the distance information. However, when the distance information is erroneously detected, in particular, when the distance is erroneously detected as being larger than an actual distance, the robot hand 10 (attraction pads 22) pushes in the article W, as a result of which the article W may break or may be deformed.

Accordingly, by providing the second proximity sensors 25 having the above-described structure at the robot hand 10, the downward movement of the robot hand 10 is stopped before the baseplate 21 comes close to the article W. This makes it possible to avoid breakage and deformation of the article W caused by the pushing in of the article W by the robot hand 10. In addition, since the article W is pushed in uniformly over the entire baseplate 21, the detection can be satisfactorily performed primarily by the sensors disposed at the outer peripheral portions of the baseplate 21. Therefore, by disposing the second proximity sensors 25 at substantially equal intervals along the contour of the baseplate 21, it is possible not to allow the article W to be pushed in using the minimum number of sensors required.

The third proximity sensors 26 (third sensors) are disposed at outer sides of the contour of the baseplate 21. In this example, the third proximity sensors 26 are disposed at outer sides of two adjacent sides among the four sides of the baseplate 21. Rectangular horizontal supporting frames 25 are connected to the outer peripheral portions of the two sides of the baseplate 21. Two third proximity sensors 26 are disposed at outer portions of each supporting frame 27. The way in which the third proximity sensors 26 are arranged is not limited to this example. The third proximity sensors 26 are capable of being variously arranged. For example, the third proximity sensors 26 may be disposed at outer sides of the four sides of the baseplate 21. The third proximity sensors 26 are used for confirming whether or not an article W that is attracted by attraction pads 22 is oversized. Similarly to the first proximity sensors 24, reflective photoelectric sensors 30 such as that shown in Fig. 4 are used for the third proximity sensors 26. Light path holes 26a extending through the supporting frames 27 are provided at the positions of the supporting frames 27 corresponding to the third proximity sensors 26.

As described above, the baseplate 21 has external dimensions (for example, substantially the same external dimensions) corresponding to the dimensions of a largest one of the plurality of articles W that become predeterminate objects to be held. By providing the third proximity sensors 26 at the outer sides of the contour of the baseplate 21, when the third proximity sensors 26 have detected an article W that is being held, it is possible to assume that an article W that is larger than a predetermined maximum size is held. That is, it is possible to detect that the article W is oversized.

If an obstacle exists in a path of movement of the robot hand 10 that is moving downward or horizontally, the third proximity sensors 26 are capable of detecting the obstacle before the robot hand 10 collides with the obstacle. Therefore, it is possible to avoid the collision with the obstacle by stopping the movement of the robot hand 10.

### 3. Functional Structure of Robot Controller

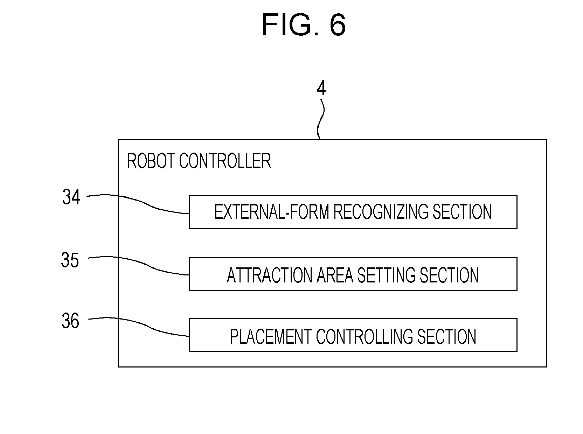

As shown in Fig. 6, the robot controller 4 includes an external-form recognizing section 34, an attraction area setting section 35, and a placement controlling section 36. On the basis of detection results of the plurality of first proximity sensors 24 when attraction pads 22 hold an article W, the external-form recognizing section 34 recognizes the external-form information (dimensions, shape) of the article W. On the basis of the recognized external-form information, the attraction area setting section 35 sets an area of attraction pads 22 that attract the article W at the baseplate 21. The placement controlling section 36 performs control so that the lowering of the robot hand 10 is stopped when the photoelectric sensor 28 detects the bottom surface of the article W held by the attraction pads 22, after which the attraction pads 22 stop holding the article W and the article W is placed on the conveyor 6. Although not shown in Fig. 6, the robot controller 4 has various functions for controlling the operations of the robots 2 and 3 in addition to the above-described operation.

### 4. Attraction and Holding of Article When Image Recognition Error Occurs

When attraction pads 22 of the robot hand 10 of the first robot 2 hold an article W on the pallet P, the camera 7, provided at the robot hand 20 of the second robot 3, performs imaging on the top surface of the article W on the pallet P. Here, when a plurality of articles W having the same shape, such as cardboard boxes, are disposed side by side without any gaps therebetween, the articles are not capable of being image-recognized as a plurality of articles W, that is, the articles W may be erroneously recognized as a single article.

In the embodiment, as described above, when the plurality of articles W is image-recognized as a single article, the dimensions of the erroneously recognized article exceed the dimensions of a largest one of the plurality of articles W that become predeterminate objects to be held, as a result of which an image recognition error occurs. When such an image recognition error occurs, the robot controller 4 operates attraction pads 22 in an area corresponding to an article W having predetermined minimum dimensions among the plurality of attraction pads 22 of the baseplate 21, so that the operated attraction pads 22 provisionally attract and hold the article W. On the basis of the detection results of the first proximity sensors 24 for this time, external-form information (dimensions, shape) of the article W is recognized. Then, on the basis of the recognized external-form information of the article W, the area of the attraction pads 22 that attract the article W at the baseplate 21 is set, and the article W is re-attracted and held by the attraction pads 22 in the set area. These operations are hereunder described in detail.

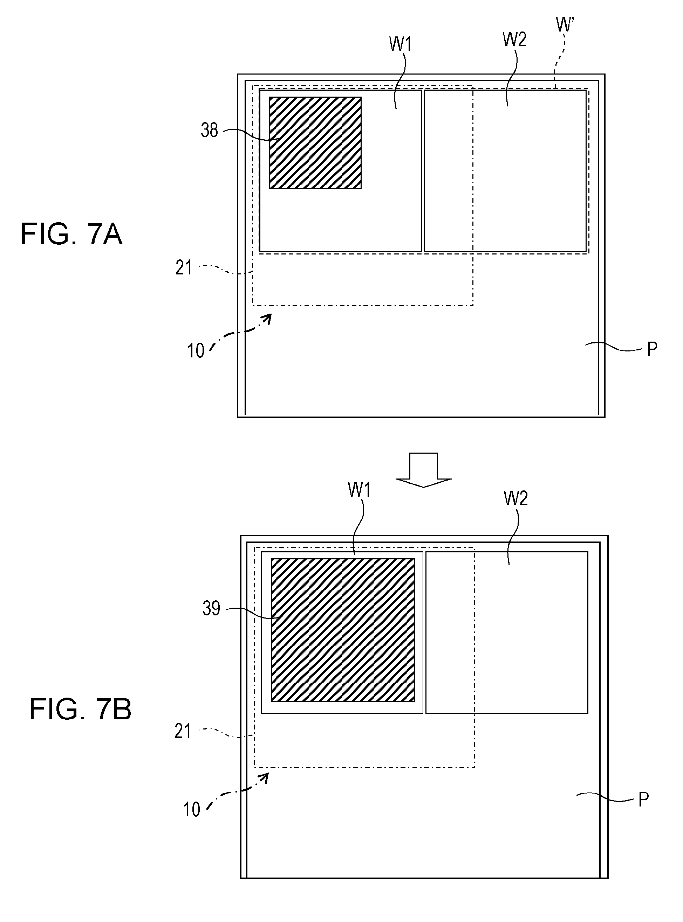

Figs. 7A and 7B are each an explanatory view of an example of attracting and holding an article when the image recognition error occurs. In Fig. 7A, two articles W1 and W2 that are stacked on the pallet P are arranged side by side without any gap therebetween. In an image recognition operation performed by carrying out imaging using the camera 7, the articles are erroneously recognized as one article W', as a result of which the image recognition error occurs. In this case, the robot controller 4 causes the attraction pads 22 that are positioned in a minimum area 38 corresponding to the article W having the predetermined minimum dimensions among the plurality of attraction pads 22 of the baseplate 21 to be operated, so that, with, for example, the minimum area 38 being disposed at a corner of the pallet P (that is, an upper left corner in Fig. 7A), the minimum area 38 attracts the top surface of the article W', and the article W' is held. Then, when the robot hand 10 is moved upward, only one of the two articles W1 and W2 that is attracted and held by the attraction pads 22, that is, only the article W1 (left article in Fig. 7A) is lifted, whereas the other article W2 (right article in Fig. 7A) remains on the pallet P. Therefore, when the plurality of first proximity sensors 24 of the baseplate 21 are used to detect the article, only the first proximity sensors 24 corresponding to the attracted article W1 detect the article and turns on. The other first proximity sensors 24 that are positioned at the outer sides of the first proximity sensors 24 corresponding to the attracted article W1 do not detect the article and turn off. This causes the external-form recognizing section 34 of the robot controller 4 to recognize external-form information (dimensions, shape) of the article W1 on the basis of detection results of the first proximity sensors 24.

Thereafter, as shown in Fig. 7B, on the basis of the recognized external-form information of the article W1, the attraction area setting section 35 sets an area 39 of the attraction pads 22 that perform attraction at the baseplate 21 as a suitable area that is neither too large or too small with reference to the external dimensions of the article W1. Then, the robot controller 4 re-operates the attraction pads 22 at the set suitable area 39, so that the attraction pads 22 re-attract and hold the article W.

### 5. Procedure of Control Using Robot Controller

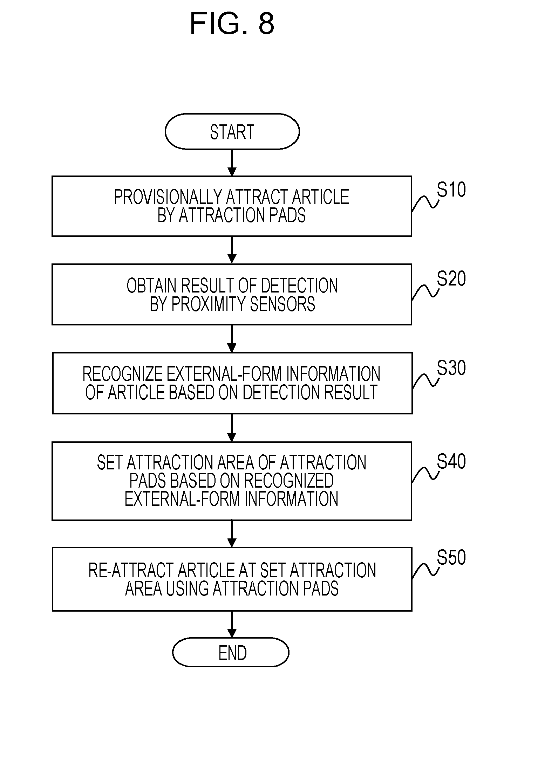

An example of a control procedure performed by the robot controller 4 when the above-described image recognition error occurs is shown in Fig. 8. The robot controller 4 causes the laser sensor 8 to measure the distance to the top surface of a top article W on the pallet P, and the camera 7 to perform imaging on the top article W identified by measuring the distance. If the above-described image recognition error occurs, the steps of this flowchart are started.

First, in Step S10, the robot controller 4 outputs a control signal to the first robot 2, and controls a position based on, for example, distance information and external-form information of the article W, to move the robot hand 10 of the first robot 2 to a position above the pallet P. Then, the robot controller 4 lowers the robot hand 10, causes the attraction pads 22 in an area of the baseplate 21 corresponding to an article having predetermined minimum dimensions to operate, causes the operated attraction pads 22 to provisionally attract and hold the identified article W, and causes the operated attraction pads 22 to, for example, lift the article W.

Then, in Step S20, the robot controller 4 obtains detection results of the plurality of first proximity sensors 24 at the baseplate 21 while the attraction pads 22 hold the article W.

Next, in Step S30, the external-form recognizing section 34 of the robot controller 4 recognizes the external-form information (dimensions, shape) of the article W on the basis of the detection results of the first proximity sensors 24. As described above, only the first proximity sensors 24 corresponding to the held article W among the plurality of first proximity sensors 24 are turned on, whereas the other first proximity sensors 24 that are positioned at the outer sides of the held article W1 are turn off. Therefore, the external-form information (dimensions, shape) of the article W is recognized. After recognizing the external-form information, the robot controller 4 lowers the robot hand 10, stops the attraction pads 22 from holding the article W, and causes the article W to be placed on the pallet P.

In Step S40, on the basis of the recognized external-form information of the article W, the attraction area setting section 35 of the robot controller 4 sets an area (attraction area) of the attraction pads 22 that attract the article W at the baseplate 21. After setting the attraction area, the article W may be placed on the pallet P.

Thereafter, in Step S50, the robot controller 4 re-operates the attraction pads 22 at the set attraction area and causes the attraction pads 22 to re-attract and hold the article W for handling the article W. This makes it possible for the attraction pads 22 to stably hold the article W and to move towards the conveyor 6. When the Step S50 ends, this flow ends.

### 6. Advantages of Embodiment

As described above, the first robot 2 according to the embodiment depalletizes a plurality of articles W that are stacked on the pallet P one at a time. Here, by scanning the top surface of a top article W on the pallet P using the laser sensor 8 of the robot hand 20 of the second robot 3, distance information regarding the distance to the top surface of the top article W on the pallet P is obtained, to identify the article W whose top surface exists at a highest position. Then, the camera 7 of the robot hand 20 performs imaging on the top surface of the identified article W, and the image processor 5 performs an image recognition operation, so that external-form information of the top surface is obtained. On the basis of, for example, the distance information and the external-form information, the first robot 2 causes the robot hand 10 to move and hold the article W.

Here, when a plurality of articles W having the same shape, such as cardboard boxes, are disposed side by side on the pallet P without any gaps therebetween, the articles W are not capable of being image-recognized as a plurality of articles W, that is, the articles W may be recognized as a single article. When such an erroneous recognition occurs, for example, the operation of the robot is stopped due to an error or dropping of the article. This may cause a depalletizing operation to be stopped.

In the embodiment, a plurality of proximity sensors (first proximity sensors 24 to third proximity sensors 26) are arranged on the baseplate 21 of the robot hand 10. Therefore, when, as described above, an image recognition operation is not capable of being performed, for the time being, the attraction pads 22 hold, lift, and handle an article W, and external-form information (dimensions, shape) of the article W is capable of being recognized on the basis of the detection results of the plurality of proximity sensors in an operated state. As a result, on the basis of the recognized external-form information of the article W, it is possible to set a suitable holding mode of the attraction pads 22, and to re-hold and handle the article W in the set holding mode. In this way, even if the article W to be depalletized is erroneously recognized, it is possible to continue the depalletizing operation without, for example, the operation of the robot being stopped due to an error or dropping of the article W.

In the embodiment, in particular, the plurality of first proximity sensors 24 arranged so as to be interspersed in the direction of the surface of the baseplate 21 are included among the plurality of proximity sensors. Using on/off information of the first proximity sensors arranged so as to be interspersed in the direction of the surface of the baseplate 21, it is possible to clarify the external-form information (dimensions, shape) of the handled article W and to increase recognition precision.

As described above, when an obstacle exists in a path of movement of the robot hand 10 that is moving (downward or horizontally), the first proximity sensors 24 are capable of detecting the obstacle to avoid a collision. Further, it is possible to detect that an article W has dropped and that a wrong article is held.

In the embodiment, in particular, the second proximity sensors 25 arranged at substantially equal intervals along the contour of the baseplate 21 are included among the plurality of proximity sensors. As described above, this makes it possible to avoid breakage and deformation of the article W occurring when it is pushed in by the robot hand 10.

In the embodiment, in particular, the third proximity sensors 26 arranged at an outer side of the contour of the baseplate 21 are included among the plurality of proximity sensors. As described above, this makes it possible to detect that an article W is oversized. If an obstacle exists in a path of movement of the robot hand 10 that is moving (downward or horizontally), the third proximity sensors 26 are capable of detecting the obstacle to avoid a collision.

In the embodiment, in particular, a plurality of attraction pads 22, serving as holding members, arranged so as to be interspersed in the direction of the surface of the baseplate 21 and formed so as to attract the top surface of an article W are provided. This makes it possible to select where appropriate the attraction pads 22 that attract the article W, serving as a holding object, in accordance with the external form of the article W. Therefore, it is possible to hold articles having various sizes and shapes. In addition, since it is possible to change an attraction position at the baseplate 21 in accordance with where the article W, serving as a holding object, is placed within the pallet P, it is possible to increase depalletizing efficiency.

In the embodiment, in particular, the robot system 1 includes a conveyor 6 that transports an article W placed on the conveyor 6 by the first robot 2, and a photoelectric sensor 28 that is disposed above the transport surface 6a of the conveyor 6 where an article W is placed and that includes a phototransmitting section 28a and a photoreceiving section 28b. The phototransmitting section 28a is positioned on one side of the conveyor 6 in the width direction thereof, and the photoreceiving section 28b is positioned on the other side of the conveyor 6 in the width direction thereof.

By this, the placement controlling section 36 of the robot controller 4 performs control so that the lowering of the robot hand 10 is stopped when the photoelectric sensor 28 detects the bottom surface of an article W held by the attraction pads 22, after which the attraction pads 22 stop holding the article W to place the article W on the conveyor 6. As a result, the article W is capable of being smoothly placed on the conveyor 6 regardless of the height of the article W. Therefore, it becomes unnecessary to provide devices, such as a camera and a sensor, for detecting the height of the article W. This simplifies the structure of the robot system 1.

### 7. Modification

The disclosure is not limited to the above-described disclosed embodiment. Various modifications are possible without departing from the gist and technical ideas of the disclosure.

In the above-described embodiment, in addition to the first robot 2, the second robot 3 is provided for mounting the camera 7 and the laser sensor 8 on the second robot 3. However, for example, by mounting the camera 7 and the laser sensor 8 on the first robot 2, only one first robot 2 may be provided, that is, the second robot 3 does not have to be provided.

Although the first proximity sensors 24 to the third proximity sensors 26 are photoelectric sensors, they may be, for example, capacitive sensors or ultrasonic sensors.

In addition to what are already described above, it is possible to combine techniques according to the embodiment, etc. where appropriate.

Although not exemplified one by one, the embodiment, etc. can be variously modified without departing from the gist thereof.

It should be understood by those skilled in the art that various modifications, combinations, sub-combinations and alterations may occur depending on design requirements and other factors insofar as they are within the scope of the appended claims or the equivalents thereof.

## Claims

1. A robot hand (10) of a robot (2) that handles an article, the robot hand (10) comprising:
a baseplate (21);
a holding member (22) that is disposed at the baseplate (21) and that is configured to hold the article; and
a plurality of proximity sensors (24, 25, 26) that are disposed at the baseplate (21), each of the proximity sensors (24, 25, 26) being configured to detect whether or not the article exists at a side of the holding member(22).

2. The robot hand (10) according to Claim 1, wherein the plurality of proximity sensors include a plurality of first sensors that are disposed so as to be interspersed in a direction of a surface of the baseplate.

3. The robot hand (10) according to either Claim 1 or Claim 2, wherein the plurality of proximity sensors include a plurality of second sensors that are disposed at substantially equal intervals along a contour of the baseplate.

4. The robot hand (10) according to any one of Claims 1 to 3, wherein the plurality of proximity sensors include a third sensor that is disposed at an outer side of a contour of the baseplate.

5. The robot hand (10) according to any one of Claims 1 to 4, wherein a plurality of the holding members are provided, and wherein the plurality of the holding members are a plurality of attraction pads that are disposed so as to be interspersed in a direction of a surface of the baseplate and that are each configured to attract a top surface of the article.

6. A robot system (1) comprising:
a robot (2) that handles an article;
the robot hand (10) according to any one of Claims 1 to 5 of the robot (2); and
a controller (4) that is configured to control an operation of the robot (2) and an operation of the robot hand (10).

7. The robot system (1) according to Claim 6, wherein the controller includes an external-form recognizing section (34) that is configured to recognize external-form information of the article on the basis of a detection result of the plurality of proximity sensors when the article is held and handled by the holding member.

8. The robot system (1) according to either Claim 6 or Claim 7, further comprising:
a conveyor (6) that is configured to transport the article placed thereon by the robot; and
a photoelectric sensor (28) that is disposed above a transport surface of the conveyor (6) at a position where the article is placed, the photoelectric sensor (28) including a phototransmitting section and a photoreceiving section, the phototransmitting section being positioned on one side of the conveyor (6) in a width direction thereof, the photoreceiving section being positioned on the other side of the conveyor (6) in the width direction thereof.

9. The robot system (1) according to Claim 8, wherein the controller includes a placement controlling section (36) that is configured to stop a lowering of the robot hand when the photoelectric sensor detects a bottom surface of the article held by the holding member, after which the holding member stops holding the article and the article is placed on the conveyor.

10. A method for depalletizing an article using a robot including a robot hand that includes a baseplate, a plurality of attraction pads, and a plurality of proximity sensors, the method comprising:
attracting and handling the article using the attraction pad or attraction pads in a predetermined area;
recognizing external-form information of the article on the basis of a detection result of the proximity sensor or proximity sensors in an operated state;
setting an area of the attraction pad or attraction pads that perform attraction on the basis of the recognized external-form information; and
re-attracting and handling the article using the attraction pad or attraction pads in the set area,
wherein the plurality of attraction pads are disposed so as to be interspersed in a direction of a surface of the baseplate and are each configured to attract a top surface of the article, and
wherein the plurality of proximity sensors are disposed at the baseplate, each proximity sensor being configured to detect whether or not the article exists at a side of the holding member.
